(19) Europäisches Patentamt
European Patent Office
Office européen des brevets

(11) **EP 4 529 301 A1**

(12) **EUROPEAN PATENT APPLICATION**
published in accordance with Art. 153(4) EPC

(43) Date of publication:
26.03.2025 Bulletin 2025/13

(21) Application number: 23814649.2

(22) Date of filing: 13.02.2023

(51) International Patent Classification (IPC):
*H04W 56/00* (2009.01)

(52) Cooperative Patent Classification (CPC):
H04W 56/00

(86) International application number:
PCT/CN2023/075611

(87) International publication number:
WO 2023/231450 (07.12.2023 Gazette 2023/49)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 28.05.2022 CN 202210594963

(71) Applicant: Huawei Technologies Co., Ltd.
Shenzhen, Guangdong 518129 (CN)

(72) Inventors:
• ZANG, Xin
Shenzhen, Guangdong 518129 (CN)
• ZHOU, Runze
Shenzhen, Guangdong 518129 (CN)
• WANG, Yuan
Shenzhen, Guangdong 518129 (CN)

(74) Representative: Maiwald GmbH
Engineering
Elisenhof
Elisenstrasse 3
80335 München (DE)

(54) **TIME SYNCHRONIZATION METHOD AND COMMUNICATION APPARATUS**

(57) Embodiments of this application provide a time synchronization method and a communication apparatus. The method includes: An access network device obtains first round-trip time information between the access network device and a terminal device, second round-trip time information between the access network device and a benchmark device, and third round-trip time information between the benchmark device and the terminal device; determines a delay from the access network device to the terminal device based on the first round-trip time information, the second round-trip time information, and the third round-trip time information; and sends the delay or an offset between the access network device and the terminal device to the terminal device, where the delay or the offset is used for time synchronization of the terminal device. In this solution, the access network device may accurately determine the offset or the delay, and the terminal device performs time synchronization based on the offset or the delay. This can reduce impact of path asymmetry on time provision of a base station, implement accurate time synchronization between the terminal device and the access network device, and help improve a communication capability of the terminal device.

FIG. 2

**Description**

**CROSS-REFERENCE TO RELATED APPLICATIONS**

This application claims priority to Chinese Patent Application No. 202210594963.3, filed with the China National Intellectual Property Administration on May 28, 2022 and entitled "TIME SYNCHRONIZATION METHOD AND COMMUNICATION APPARATUS", which is incorporated herein by reference in its entirety.

**TECHNICAL FIELD**

This application relates to the field of communication technologies, and in particular, to a time synchronization method and a communication apparatus.

**BACKGROUND**

To ensure correct communication between a terminal device and another device, time synchronization generally needs to be performed on the terminal device. In a current synchronization method, the terminal device receives a system information block (system information block, SIB) message broadcast by an access network device, where the SIB message carries time provision information of the access network device. The terminal device obtains the time provision information from the SIB message, and performs time synchronization with the access network device based on the time provision information.

How to ensure accuracy of the time provision information to implement accurate time synchronization of the terminal device is to be resolved.

**SUMMARY**

Embodiments of this application provide a time synchronization method and a communication apparatus, to implement time synchronization between a terminal device and an access network device.

According to a first unified data repository network element provides a time synchronization method. The method may be performed by an access network device or a module in an access network device. An example in which the access network device performs the method is used. The method includes: The access network device obtains first round-trip time information between the access network device and a terminal device, second round-trip time information between the access network device and a benchmark device, and third round-trip time information between the benchmark device and the terminal device; the access network device determines a delay from the access network device to the terminal device based on the first round-trip time information, the second round-trip time information, and the third round-trip time information; and the access network device sends the delay or an offset between the access network device and the terminal device to the terminal device, where the delay or the offset is used for time synchronization of the terminal device, and the offset is determined based on the first round-trip time information and the delay.

In the foregoing solution, the access network device may accurately determine the offset or the delay, and send the offset or the delay to the terminal device, and the terminal device performs time synchronization based on the offset or the delay. This can reduce impact of path asymmetry on time provision of the base station, implement accurate time synchronization between the terminal device and the access network device, and help improve a communication capability of the terminal device.

In a possible implementation method, the access network device receives a notification message, where the notification message includes identification information of the benchmark device, identification information of the terminal device, and indication information, and the indication information indicates to perform a time provision error elimination operation.

In the foregoing solution, when the access network device receives the notification message, the indication information in the notification message is for triggering the access network device to perform the time provision error elimination operation when the access network device provides a time provision service for the terminal device, to implement accurate time synchronization between the terminal device and the access network device.

In a possible implementation method, the access network device sends the identification information of the terminal device and the indication information to the benchmark device.

In a possible implementation method, that the access network device determines a delay from the access network device to the terminal device based on the first round-trip time information, the second round-trip time information, and the third round-trip time information includes: The access network device determines the delay from the access network device to the terminal device based on a target function, the first round-trip time information, the second round-trip time information, and the third round-trip time information.

In a possible implementation method, the target function is preconfigured in the access network device, or is from an application function network element or a clock management network element.

In a possible implementation method, that the access network device determines the delay from the access network device to the terminal device based on a target function, the first round-trip time information, the second round-trip time information, and the third round-trip time information includes: The access network device determines restrictive conditions of the target function based on the first round-trip time information, the second round-trip time information, and the third round-trip time information; and the access network device determines the delay from the access network device to the terminal device based on the restrictive conditions of the target function and the target function.

In a possible implementation method, the target function is a minimum value function or a minimum mean square error function that uses the restrictive conditions as solution space preferences.

In a possible implementation method, the restrictive conditions of the target function include:

$$(1)\ a+b=D1;$$

$$(2)\ c+d=D2;$$

$$(3)\ e+f=D3;$$

and

$$(4)\ b+c+e=D4,$$

where

a is the delay from the access network device to the terminal device, b is a delay from the terminal device to the access network device, c is a delay from the access network device to the benchmark device, d is a delay from the benchmark device to the access network device, e is a delay from the benchmark device to the terminal device, f is a delay from the terminal device to the benchmark device, D1 is determined based on the first round-trip time information, D2 is determined based on the second round-trip time information, D3 is determined based on the third round-trip time information, and D4 is determined based on the first round-trip time information, the second round-trip time information, and the third round-trip time information.

In a possible implementation method, the target function is min(abs(a-b)+abs(d-c)+abs(f-e)) or min(min(abs(a-b)+abs(d-c)+abs(f-e))), where min() represents a minimum value function, and abs() represents an absolute value function.

In a possible implementation method, the target function is MSE(a-a'), MSE(b-b'), or MSE((a-a')+(b-b')), where MSE() represents a minimum mean square error function.

In a possible implementation method, the benchmark device is a benchmark terminal device, and the terminal device is connected to the benchmark terminal device through an optical fiber; and the restrictive conditions of the target function include:

$$(1)\ a+b=D1;$$

$$(2)\ c+d=D2;$$

and

$$(3)\ b+c+e=D4,$$

where

a is the delay from the access network device to the terminal device, b is a delay from the terminal device to the access network device, c is a delay from the access network device to the benchmark terminal device, d is a delay from the benchmark terminal device to the access network device, e is a delay from the benchmark terminal device to the terminal device, D1 is determined based on the first round-trip time information, D2 is determined based on the second round-trip time information, and D4 is determined based on the first round-trip time information, the second round-trip time information, and the third round-trip time information.

In a possible implementation method, the target function is min(abs(a-b)+abs(d-c)), where min() represents a minimum value function, and abs() represents an absolute value function.

In a possible implementation method, the benchmark device is a benchmark access network device, and the access network device is connected to the benchmark access network device through an optical fiber; and the restrictive conditions of the target function include:

$$(1)\ a+b=D1;$$

$$(2)\ e+f=D3;$$

and

$$(3)\ b+c+e=D4,$$

where

a is the delay from the access network device to the terminal device, b is a delay from the terminal device to the access network device, c is a delay from the access network device to the benchmark access network device, e is a delay from the benchmark access network device to the terminal device, f is a delay from the terminal device to the benchmark access network device, D1 is determined based on the first round-trip time information, D3 is determined based on the third round-trip time information, and D4 is determined based on the first round-trip time information, the second round-trip time information, and the third round-trip time information.

In a possible implementation method, the target function is min(abs(a-b)+abs(f-e)), where min() represents a minimum value function, and abs() represents an absolute value function.

According to a second unified data repository network element provides a time synchronization method. The method may be performed by a clock management network element or a module in a clock management network element. An example in which the clock management network element performs the method is used. The method includes: The clock management network element receives a time provision request message, where the time provision request message includes identification information of a terminal device, identification information of a benchmark device, and indication information, and the indication information indicates to perform a time provision error elimination operation; the clock management network element selects an access network device that provides a time provision service for the terminal device; and the clock management network element sends a notification message to a policy control network element or a mobility management network element, where the notification message includes the identification information of the terminal device, the identification information of the benchmark device, identification information of the access network device, and the indication information.

In the foregoing solution, the clock management network element sends the notification message to the policy control network element or the mobility management network element based on a time provision request, and then the policy control network element or the mobility management network element may send the notification message to the access network device, to trigger the access network device to perform the time provision error elimination operation when the access network device provides the time provision service for the terminal device, to implement accurate time synchronization between the terminal device and the access network device.

In a possible implementation method, the clock management network element sends a query message to a unified data repository network element, where the query message includes the identification information of the terminal device, and the query message is for requesting to obtain the policy control network element or the mobility management network element that provides a service for the terminal device; and the clock management network element receives identification information of the policy control network element or identification information of the mobility management network element from the unified data repository network element.

In a possible implementation method, the clock management network element sends a request message to a unified data management network element, where the request message includes the identification information of the terminal device, and the request message is used to query whether the terminal device is authorized to be provided with the time provision service; and the clock management network element receives a response message from the unified data management network element, where the response message indicates that the terminal device is authorized to be provided with the time provision service.

In the foregoing solution, when it is determined that the terminal device is authorized to obtain the time provision service, the time provision service is provided for the terminal device, to avoid providing the time provision service for a terminal device that is not authorized, thereby avoiding a waste of resources.

In a possible implementation method, that the clock management network element receives a time provision request message includes: The clock management network element receives the time provision request message from the terminal device or an application function network element.

According to a third unified data repository network element provides a time synchronization method. The method may be performed by a mobility management network element, a policy control network element, a module in a mobility management network element, or a module in a policy control network element. The method includes: receiving a first notification message, where the first notification message includes identification information of a terminal device, identification information of a benchmark device, indication information, identification information of a plurality of access network devices, and capability information of the plurality of access network devices, the capability information indicates whether the access network device can provide time, and the indication information indicates to perform a time provision error elimination operation; selecting, based on location information of the plurality of access network devices and the capability information of the plurality of access network devices, an access network device that provides a time provision service for the terminal device; and sending a second notification message to the selected access network device, where the second notification message includes the identification information of the terminal device, the identification information of the benchmark device, and the indication information.

In the foregoing solution, a policy control network element or a mobility management network element sends the notification message to the access network device, to trigger the access network device to perform the time provision error elimination operation when the access network device provides the time provision service for the terminal device, to implement accurate time synchronization between the terminal device and the access network device.

In a possible implementation method, the selecting, based on location information of the plurality of access network devices and the capability information of the plurality of access network devices, an access network device that provides a time provision service for the terminal device includes: selecting, from the plurality of access network devices based on the capability information of the plurality of access network devices, at least one access network device that can provide time; and selecting, based on location information of the at least one access network device, an access network device that provides a time provision service for the terminal device.

According to a fourth unified data repository network element provides a communication apparatus. The apparatus may be an access network device or a module in an access network device. The apparatus has a function of implementing any implementation method according to the first aspect. The function may be implemented by hardware, or may be implemented by hardware executing corresponding software. The hardware or the software includes one or more modules corresponding to the function.

According to a fifth unified data repository network element provides a communication apparatus. The apparatus may be a clock management network element or a module in a clock management network element. The apparatus has a function of implementing any implementation method according to the second aspect. The function may be implemented by hardware, or may be implemented by hardware executing corresponding software. The hardware or the software includes one or more modules corresponding to the function.

According to a sixth unified data repository network element provides a communication apparatus. The apparatus may be a mobility management network element, a policy control network element, a module in a mobility management network element, or a module in a policy control network element. The apparatus has a function of implementing any implementation method according to the third aspect. The function may be implemented by hardware, or may be implemented by hardware executing corresponding software. The hardware or the software includes one or more modules corresponding to the function.

According to a seventh unified data repository network element provides a communication apparatus, including a processor and a memory. The memory is configured to store computer instructions, and when the apparatus runs, the processor executes the computer instructions stored in the memory, so that the apparatus performs any implementation method according to the first aspect to the third aspect.

According to an eighth unified data repository network element provides a communication apparatus, including units or means (means) configured to perform steps of any implementation method according to the first aspect to the third aspect.

According to a ninth unified data repository network element provides a communication apparatus, including a processor coupled to a memory. The processor is configured to invoke a program stored in the memory, to perform any implementation method according to the first aspect to the third aspect. The memory may be located inside or outside the apparatus. In addition, there may be one or more processors.

According to a tenth unified data repository network element provides a communication apparatus, including a processor and an interface circuit. The processor is configured to: communicate with another apparatus by using the interface circuit, and perform any implementation method according to the first aspect to the third aspect. There are one or more processors.

According to an eleventh unified data repository network element further provides a computer program product. The computer program product includes a computer program or instructions. When the computer program or the instructions are run by a communication apparatus, any implementation method according to the first aspect to the third aspect is performed.

According to a twelfth unified data repository network element further provides a computer-readable storage medium. The computer-readable storage medium stores instructions, and when the instructions are run on a communication apparatus, any implementation method according to the first aspect to the third aspect is performed.

According to a thirteenth unified data repository network element further provides a chip system, including: a processor, configured to perform any implementation method according to the first aspect to the third aspect.

According to a fourteenth unified data repository network element further provides a communication system, including an access network device configured to perform any method according to the second aspect, and including a policy control network element or a mobility management network element. The policy control network element or the mobility management network element is configured to send a notification message to the access network device, where the notification message includes identification information of a terminal device, identification information of a benchmark device, and indication information, and the indication information indicates to perform a time provision error elimination operation.

In a possible implementation method, the policy control network element or the mobility management network element is further configured to: receive the identification information of the terminal device, the identification information of the benchmark device, the indication information, identification information of a plurality of access network devices, and capability information of the plurality of access network devices, where the capability information indicates whether the access network device can provide time; and select, based on location information of the plurality of access network devices and the capability information of the plurality of access network devices, an access network device that provides a time provision service for the terminal device.

In a possible implementation method, the policy control network element or the mobility management network element is specifically configured to: select, from the plurality of access network devices based on the capability information of the plurality of access network devices, at least one access network device that can provide time; and select, based on location information of the at least one access network device, an access network device that provides a time provision service for the terminal device.

## BRIEF DESCRIPTION OF DRAWINGS

FIG. 1(a) is a diagram of a service-based 5G network architecture;
FIG. 1(b) is a diagram of a point to point interface-based 5G network architecture;
FIG. 2 is a flowchart of a time synchronization method according to an embodiment of this application;
FIG. 3(a) is an example diagram of time synchronization according to an embodiment of this application;
FIG. 3(b) is another example diagram of time synchronization according to an embodiment of this application;
FIG. 4A and FIG. 4B are a flowchart of a time synchronization method according to an embodiment of this application;
FIG. 5A and FIG. 5B are a flowchart of a time synchronization method according to an embodiment of this application;
FIG. 6 is a diagram of a communication apparatus according to an embodiment of this application; and
FIG. 7 is a diagram of a communication apparatus according to an embodiment of this application.

## DESCRIPTION OF EMBODIMENTS

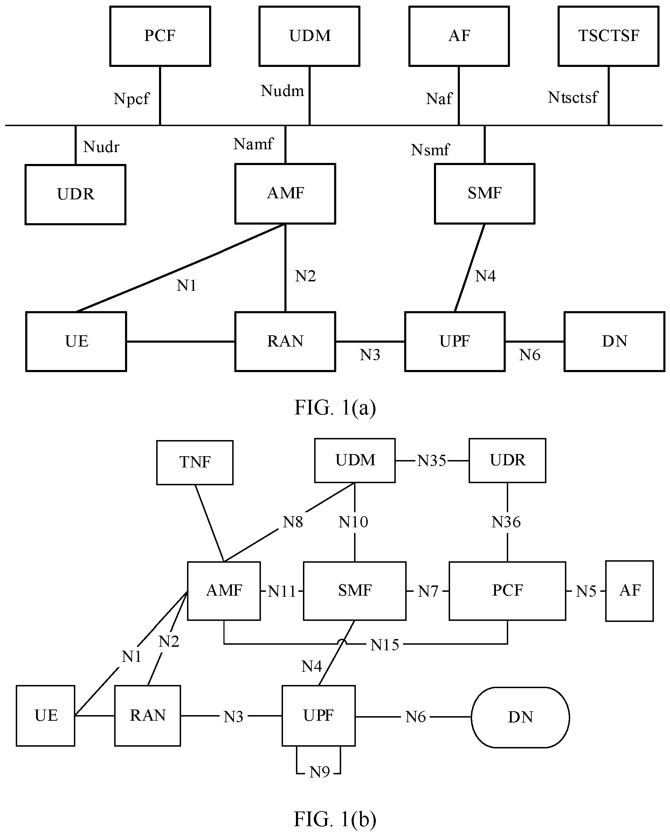

FIG. 1(a) is a diagram of a service-based 5G network architecture. The 5G network architecture shown in FIG. 1(a) includes a data network (data network, DN) and an operator network. The following briefly describes functions of some network elements in the 5G network architecture.

An operator network includes one or more of the following network elements: an authentication server function (Authentication Server Function, AUSF) network element (not shown in the figure), a unified data management (unified data management, UDM) network element, a unified data repository (Unified Data Repository, UDR) network element, a network repository function (Network Repository Function, NRF) network element (not shown in the figure), a network exposure function (network exposure function, NEF) network element (not shown in the figure), an application function (application function, AF) network element, a policy control function (policy control function, PCF) network element, an access and mobility management function (access and mobility management function, AMF) network element, a session management function (session management function, SMF) network element, a UPF network element, an access network (access network, AN) device (a radio access network (radio access network, RAN) device is used as an example in the figure), a time sensitive communication and time synchronization function (Time Sensitive Communication and Time Synchronization Function, TSCTSF) network element, and the like. In the operator network, a network element or device other than the access network device may be referred to as a core network element or a core network device.

The access network device includes a wired access network device and a radio access network device. The radio access network device may be a base station (base station), an evolved NodeB (evolved NodeB, eNodeB), a transmission reception point (transmission reception point, TRP), a next generation NodeB (next generation NodeB, gNB) in a 5G mobile communication system, a next generation NodeB in a 6th generation (6th generation, 6G) mobile communication system, a base station in a future mobile communication system, an access node in a wireless fidelity (wireless fidelity, Wi-Fi) system, or the like; or may be a module or a unit that completes some functions of a base station, for example, may be a central unit (central unit, CU), or may be a distributed unit (distributed unit, DU). The radio access network device may be a macro base station, may be a micro base station or an indoor base station, or may be a relay node, a donor node, or the like. A specific technology and a specific device form that are used by the access network device are not limited in embodiments of this application.

A terminal device communicating with the RAN includes a terminal, a user equipment (user equipment, UE), a mobile station, a mobile terminal, and the like. In the figure, an example in which the terminal device is the UE is used. The terminal device may be widely used in various scenarios, for example, device-to-device (device-to-device, D2D), vehicle-to-everything (vehicle-to-everything, V2X) communication, machine-type communication (machine-type communication, MTC), an internet of things (internet of things, IoT), virtual reality, augmented reality, industrial control, autonomous driving, telemedicine, a smart grid, smart furniture, smart office, smart wearable, smart transportation, and a smart city. The terminal may be a mobile phone, a tablet computer, a computer having a wireless transceiver function, a wearable device, a vehicle, an uncrewed aerial vehicle, a helicopter, an airplane, a ship, a robot, a mechanical arm, a smart home device, or the like. A specific technology and a specific device form that are used by the terminal device are not limited in embodiments of this application.

The access network device and the terminal device may be located in fixed locations, or may be movable. The access network device and the terminal device may be deployed on land, including an indoor or outdoor scenario and a handheld or vehicle-mounted scenario; or may be deployed on water; or may be deployed on an airplane, a balloon, and an artificial satellite in the air. Application scenarios of the access network device and the terminal device are not limited in embodiments of this application.

The mobility management network element is a control plane network element provided by the operator network, and is responsible for access control and mobility management for accessing the operator network by the terminal device, for example, including functions such as mobility status management, allocation of a temporary user identity, and user authentication and authorization. In 5G, the mobility management network element may be the AMF network element. In future communication such as a 6th generation (the 6th generation, 6G), the mobility management network element may still be the AMF network element, or may have another name. This is not limited in this application.

The session management network element is a control plane network element provided by the operator network, and is responsible for managing a protocol data unit (protocol data unit, PDU) session of the terminal device. The PDU session is a channel used to transmit a PDU, and the terminal device needs to transmit the PDU to the DN through the PDU session. The SMF network element is responsible for establishment, maintenance, deletion, and the like of the PDU session. The session management network element includes session-related functions such as session management (for example, session establishment, modification, and release, including tunnel maintenance between a user plane network element and the access network device), selection and control of the user plane network element, service and session continuity (Service and Session Continuity, SSC) mode selection, and roaming. In 5G, the session management network element may be the SMF network element. In future communication such as 6G, the session management network element may still be the SMF network element, or may have another name. This is not limited in this application.

The user plane network element is a gateway provided by an operator, and is a gateway for communication between the operator network and the DN. The UPF network element includes user plane-related functions such as data packet routing and transmission, packet detection, service usage reporting, quality of service (Quality of Service, QoS) processing, lawful interception, uplink packet detection, and downlink data packet storage. In 5G, the user plane network element may be the UPF network element. In future communication such as 6G, the user plane network element may still be the UPF network element, or may have another name. This is not limited in this application.

The data management network element is a control plane network element provided by the operator, and is responsible for storing information such as a subscriber permanent identifier (subscriber permanent identifier, SUPI), a credential (credential), a security context (security context), and subscription data of a subscriber in the operator network. The information stored in the data management network element may be used for authentication and authorization for accessing the operator network by the terminal device. The subscriber in the operator network may be specifically a user using a service provided by the operator network, for example, a user using a SIM card of China Telecom, or a user using a SIM card of China Mobile. The subscription permanent identifier (Subscription Permanent Identifier, SUPI) of the subscriber may be a number of the SIM card or the like. The credential and the security context of the subscriber may be stored small files such as an encryption key of the SIM card or information related to encryption of the SIM card, and are used for authentication and/or authorization. The security context may be cookie (cookie), a token (token), or the like stored in a local terminal (for example, a mobile phone) of the user. The subscription data of the subscriber may be a supporting service of the SIM card, for example, a traffic package or a used network of the SIM card. It should be noted that the permanent identifier, the credential, the security context, the cookie (cookie), and the token are equivalent to information related to authentication and authorization, and are not distinguished or limited in this application document for ease of description. Unless otherwise specified, the security context is used as an example for description in embodiments of this application. However, embodiments of this application are also applicable to authentication and/or authorization information described in another manner. In 5G, the data management network element may be the UDM network element. In future communication such as 6G, the data management network element may still be the UDM network element, or may have another name. This is not limited in this application.

The unified data repository network element is a control plane network element provided by the operator, and includes a function of accessing data of a type such as subscription data, policy data, and application data. In 5G, the unified data repository network element may be the UDR network element. In future communication such as 6G, the unified data repository network element may still be the UDR network element, or may have another name. This is not limited in this application.

The network exposure network element is a control plane network element provided by the operator. The network exposure network element securely exposes an external interface of the operator network to a third party. When the session management network element needs to communicate with a third-party network element, the network exposure network element may be used as a relay for communication between the session management network element and the third-party network element. When the network exposure network element serves as the relay, the network exposure network element may translate identification information of the subscriber and identification information of the third-party network element. For example, when sending the SUPI of the subscriber from the operator network to the third party, the network exposure network element may translate the SUPI into an external identity corresponding to the SUPI. On the contrary, when sending an external ID (a network element ID of the third party) to the operator network, the network exposure network element may translate the external ID into the SUPI. In 5G, the network exposure network element may be the NEF network element. In future communication such as 6G, the network exposure network element may still be the NEF network element, or may have another name. This is not limited in this application.

The application function network element is configured to transfer a requirement of an application side for a network side, for example, a QoS requirement or a user status event subscription. The application function network element may be a third-party functional entity, or may be an application server deployed by the operator. In 5G, the application function network element may be the AF network element. In future communication such as 6G, the application function network element may still be the AF network element, or may have another name. This is not limited in this application.

The policy control network element is a control plane function provided by the operator, and is configured to provide a policy of the PDU session for the session management network element. The policy may include a charging-related policy, a QoS-related policy, an authorization-related policy, and the like. In 5G, the policy control network element may be the PCF network element. In future communication such as 6G, the policy control network element may still be the PCF network element, or may have another name. This is not limited in this application.

The network repository function network element may be configured to: provide a network element discovery function, and provide, based on a request of another network element, network element information corresponding to a network element type. The network repository function network element further provides a network element management service, for example, network element registration, update, and de-registration, and network element status subscription and push. In 5G, the network repository function network element may be the NRF network element. In future communication such as 6G, the network repository function network element may still be the NRF network element, or may have another name. This is not limited in this application.

The clock management network element may be configured to manage clock information of one or more clock sources in a 5G network, and may provide the clock information of the clock source externally through a port of the clock management network element, for example, directly or indirectly provide the clock information for the terminal device, the access network device, the core network device, or a third-party application function network element. The clock information represents time, a moment, or a time point of a clock. The clock management network element may further select a corresponding time provision network element based on a time provision request of a time provision requester. The time provision network element may be, for example, the UPF network element or the access network device, or may be the clock management network element. Then, the clock management network element indicates the time provision network element to provide a time provision service for the time provision requester. In 5G, the clock management network element may be the TSCTSF network element defined in 3GPP. In future communication such as 6G, the clock management network element may still be the TSCTSF network element, or may have another name. This is not limited in this application.

The DN is a network located outside the operator network. The operator network may access a plurality of DNs, and a plurality of services may be deployed on the DN, to provide services such as data and/or a voice for the terminal device. For example, the DN is a private network of a smart factory, a sensor installed in a workshop of the smart factory may be the terminal device, a control server of the sensor is deployed in the DN, and the control server may serve the sensor. The sensor may communicate with the control server, to obtain instructions of the control server, transmit collected sensor data to the control server based on the instructions, and the like. For another example, the DN is an internal office network of a company, a mobile phone or a computer of an employee of the company may be the terminal device, and the mobile phone or the computer of the employee may access information, data resources, and the like in the internal office network of the company.

Npcf, Nudr, Nudm, Naf, Namf, Nsmf and Ntsctsf in FIG. 1(a) are service-based interfaces respectively provided by the foregoing PCF network element, the foregoing UDR network element, the foregoing UDM network element, the foregoing AF network element, the foregoing AMF network element, the foregoing SMF network element, and the foregoing TSCTSF network element, and are used to invoke corresponding service-based operations. N1, N2, N3, N4, and N6 are interface sequence numbers. Meanings of these interface sequence numbers are as follows.

(1) N1: N1 is an interface between the AMF network element and the UE, and may be configured to transfer non-access stratum (non-access stratum, NAS) signaling (for example, including a QoS rule from the AMF network element) to the UE, and the like.
(2) N2: N2 is an interface between the AMF network element and the radio access network device, and may be configured to transfer radio bearer control information from a core network side to the radio access network device, and the like.
(3) N3: N3 is an interface between the radio access network device and the UPF network element, and is mainly configured to transfer uplink user plane data and/or downlink user plane data between the radio access network device and the UPF network element.
(4) N4: N4 is an interface between the SMF network element and the UPF network element, and may be configured to transfer information between a control plane and a user plane, including delivery of a forwarding rule, a QoS rule, a traffic statistics rule, and the like from the control plane to the user plane, and reporting of user plane information.
(5) N6: N6 is an interface between the UPF network element and the DN, and is configured to transfer an uplink user data flow and/or a downlink user data flow between the UPF network element and the DN.

FIG. 1(b) is a diagram of a point to point interface-based 5G network architecture. For descriptions of functions of network elements in the 5G network architecture, refer to descriptions of functions of corresponding network elements in FIG. 1(a). Details are not described again. A main difference between FIG. 1(b) and FIG. 1(a) lies in that interfaces between control plane network elements in FIG. 1(a) are service-based interfaces, while interfaces between control plane network elements in FIG. 1(b) are point-to-point interfaces.

In the architecture shown in FIG. 1(b), names and functions of interfaces between network elements are as follows.

(1) For meanings of N1, N2, N3, N4, and N6 interfaces, refer to the foregoing descriptions.
(2) N5: N5 is an interface between an AF network element and a PCF network element, and may be configured to deliver an application service request and report a network event.
(3) N7: N7 is an interface between the PCF network element and an SMF network element, and may be configured to deliver a protocol data unit (protocol data unit, PDU) session granularity control policy and a service data flow granularity control policy.
(4) N8: N8 is an interface between an AMF network element and a UDM network element, and may be used by the AMF network element to obtain subscription data and authentication data related to access and mobility management from the UDM network element, and used by the AMF network element to register information related to terminal device mobility management with the UDM network element, and the like.
(5) N9: N9 is a user plane interface between UPF network elements, and is configured to transfer an uplink user data flow and/or a downlink user data flow between the UPF network elements.
(6) N10: N10 is an interface between the SMF network element and the UDM network element, and may be used by the SMF network element to obtain subscription data related to session management from the UDM network element, and used by the SMF network element to register information related to a terminal device session with the UDM network element, and the like.
(7) N11: N11 is an interface between the SMF network element and the AMF network element, and may be configured to: transfer PDU session tunnel information between a radio access network device and the UPF network element, transfer a control message sent to a terminal device, transfer radio resource control information sent to the radio access network device, and the like.
(8) N15: N15 is an interface between the PCF network element and the AMF network element, and may be configured to deliver a terminal device policy and an access control-related policy.
(9) N35: N35 is an interface between the UDM network element and a UDR network element, and may be used by the UDM network element to obtain user subscription data information from the UDR network element.
(10) N36: N36 is an interface between the PCF network element and the UDR network element, and may be used by the PCF network element to obtain policy-related subscription data and application data-related information from the UDR network element.

It may be understood that the foregoing network elements or functions may be network elements in a hardware device, may be software functions running on dedicated hardware, or may be virtualized functions instantiated on a platform (for example, a cloud platform). Optionally, the foregoing network elements or functions may be implemented by one device, may be jointly implemented by a plurality of devices, or may be implemented by one functional module in one device. This is not specifically limited in embodiments of this application.

In embodiments of this application, the UE, the base station, the AMF, the PCF, the NEF, the AF, the TSCTSF, the UDM, and the UDR are respectively used as specific examples of the terminal device, the access network device, the mobility management network element, the policy control network element, the network exposure network element, the application function network element, the clock management network element, the data management network element, and the unified data repository network element for description.

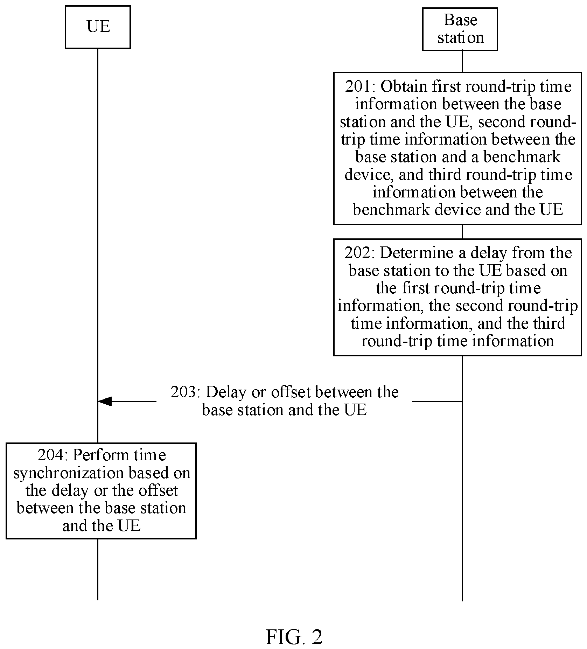

FIG. 2 is a flowchart of a time synchronization method according to an embodiment of this application. The method includes the following steps.

Step 201: A base station obtains first round-trip time information between the base station and a UE, second round-trip time information between the base station and a benchmark device, and third round-trip time information between the benchmark device and the UE.

The benchmark device is a device configured to assist in determining delays between the base station and the UE, in other words, the delays between the base station and the UE can be accurately determined with assistance of the benchmark device, where the delays specifically include a delay from the base station to the UE and a delay from the UE to the base station. Currently, the benchmark device can further assist in determining delays between the base station and the benchmark device and delays between the benchmark device and the UE.

The benchmark device may be another UE (referred to as a benchmark UE) or another base station (referred to as a benchmark base station).

The first round-trip time information indicates time of receiving and sending packets between the base station and the UE, and the first round-trip time information includes time at which the base station sends a packet and time at which the packet arrives at the UE, and further includes time at which the UE sends a packet and time at which the packet arrives at the base station.

The second round-trip time information indicates time of receiving and sending packets between the base station and the benchmark device, and the second round-trip time information includes time at which the base station sends a packet and time at which the packet arrives at the benchmark device, and further includes time at which the benchmark device sends a packet and time at which the packet arrives at the base station.

The third round-trip time information indicates time of receiving and sending packets between the benchmark device and the UE, and the third round-trip time information includes time at which the benchmark device sends a packet and time at which the packet arrives at the UE, and further includes time at which the UE sends a packet and time at which the packet arrives at the benchmark device.

In an implementation method, before step 201, the base station receives a notification message. The notification message includes identification information of the benchmark device, identification information of the UE, and indication information. The indication information indicates to perform a time provision error elimination operation, and the indication information is for triggering execution of step 201 and subsequent steps.

After receiving the notification message, the base station may further send the identification information of the UE and the indication information to the benchmark device, to trigger the benchmark device to obtain the third round-trip time information between the benchmark device and the UE. Then, the benchmark device sends the third round-trip time information to the UE.

Step 202: The base station determines the delay from the base station to the UE based on the first round-trip time information, the second round-trip time information, and the third round-trip time information.

The delay from the base station to the UE is duration taken by a packet sent by the base station to arrive at the UE, namely, a time difference between a time at which the base station sends the packet and a time at which the packet arrives at the UE.

In an implementation method, the base station may determine the delay from the base station to the UE based on a target function, the first round-trip time information, the second round-trip time information, and the third round-trip time information. For example, the base station first determines restrictive conditions of the target function based on the first round-trip time information, the second round-trip time information, and the third round-trip time information, and then determines the delay from the base station to the UE based on the restrictive conditions of the target function and the target function.

The target function is preconfigured in the base station, or is from an AF or a TSCTSF.

The target function is a minimum value function or a minimum mean square error function that uses the restrictive conditions as solution space preferences. In other words, the base station constructs a solution space based on the restrictive conditions, and obtains a minimum value or a minimum mean square error of the target function from the solution space.

Step 203: The base station sends the delay or an offset between the base station and the UE to the UE.

The delay or the offset is used for time synchronization of the UE, and time synchronization means keeping time of the UE the same as that of the base station.

The offset is determined based on the first round-trip time information and the delay.

When the base station sends the delay to the UE, the base station further sends time of the base station while sending the delay.

Step 204: The UE performs time synchronization based on the delay or the offset between the base station and the UE.

If receiving the delay and the time of the base station from the base station, the UE uses a sum of the time of the base station and the delay as current time of the UE to implement time synchronization.

If receiving the offset from the base station, the UE updates time of the UE to a sum of time at which the UE receives the offset and the offset. For example, if the UE receives the offset at a moment T, the UE uses a sum of T and the offset as current time of the UE.

In the foregoing solutions, the base station may accurately determine the offset or the delay, and send the offset or the delay to the UE, and the UE performs time synchronization based on the offset or the delay. This can reduce impact of path asymmetry on time provision of the base station, implement accurate time synchronization between the UE and the base station, and help improve a communication capability of the UE.

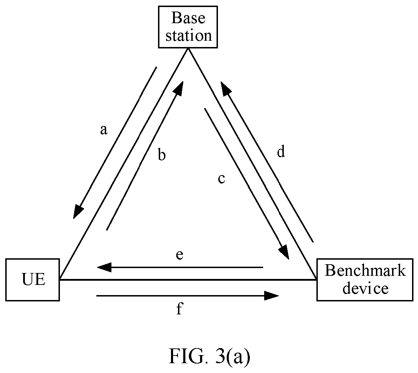

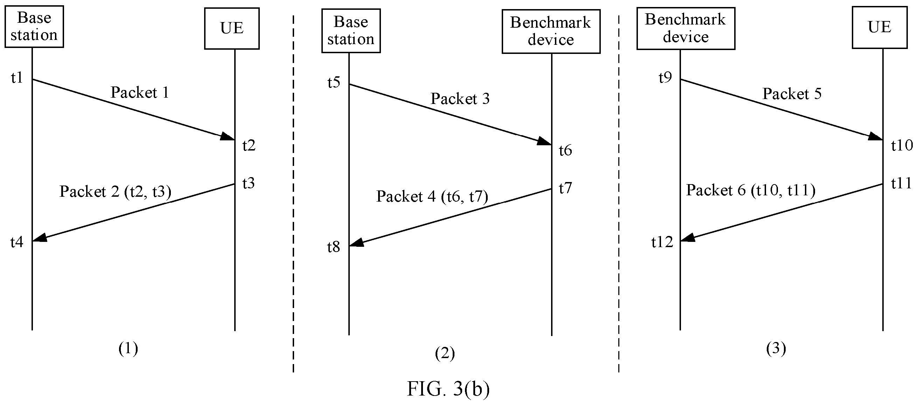

With reference to FIG. 3(a) and FIG. 3(b), the following provides a specific implementation of the embodiment in FIG. 2.

FIG. 3(a) is an example diagram of delays between devices according to an embodiment of this application. a is the delay from the base station to the UE, b is the delay from the UE to the base station, c is a delay from the base station to the benchmark device, d is a delay from the benchmark device to the base station, e is a delay from the benchmark device to the UE, and f is a delay from the UE to the benchmark device. The benchmark device may be another UE or another base station. Wireless communication is established between the UE and the base station, and the UE communicates with the base station in an air interface manner. When the benchmark device is the UE, wireless communication may be established between the UE and the benchmark device, or wired communication may be established through an optical fiber. When the benchmark device is the base station, wireless communication may be established between the base station and the benchmark device, or wired communication may be established through an optical fiber.

FIG. 3(b) is an example diagram of round-trip time (Round-Trip Time, RTT) operations according to an embodiment of this application. The embodiment in FIG. 3(b) is implemented with reference to the embodiment in FIG. 3(a), and includes the following three parts.

In a first part, an RTT operation between the base station and the UE is as follows.

Moment t1: The base station sends a packet 1 to the UE at the moment t1.

Moment t2: The UE receives the packet 1 at the moment t2.

Moment t3: The UE sends a packet 2 to the base station at the moment t3, where a packet header of the packet 2 carries the time point t2 at which the packet 1 is received and the time point t3 at which the packet 2 is sent.

Moment t4: The base station receives the packet 2 at the moment t4.

The base station may obtain four time points, that is, t1 to t4, where t1 to t4 are referred to as the first round-trip time information between the base station and the UE.

Relationships between t1 to t4 are as follows:

$$t2{-}t1{=}a{-}offset1 \quad \text{Formula (1)}$$

$$t4{-}t3{=}b{+}offset1 \quad \text{Formula (2)}$$

where offset1 represents an offset between time of the base station and time of the UE, namely, a difference between the time of the base station and the time of the UE.

Therefore, it can be concluded that:

$$offset1{=}[(t4{-}t3){-}(t2{-}t1){+}(a{-}b)]/2 \quad \text{Formula (3)}$$

$$a{+}b{=}(t2{-}t1){+}(t4{-}t3) \quad \text{Formula (4)}$$

where assuming that

$$D1=(t2-t1)+(t4-t3),\ a+b=D1 \quad \text{Formula (5)}$$

In a second part, an RTT operation between the base station and the benchmark device is as follows.

Moment t5: The base station sends a packet 3 to the benchmark device at the moment t5.

Moment t6: The benchmark device receives the packet 3 at the moment t6.

Moment t7: The benchmark device sends a packet 4 to the base station at the moment t7, where a packet header of the packet 4 carries the time point t6 at which the packet 3 is received and the time point t7 at which the packet 4 is sent.

Moment t8: The base station receives the packet 4 at the moment t8.

The base station may obtain four time points, that is, t5 to t8, where t5 to t8 are referred to as the second round-trip time information between the base station and the benchmark device.

Relationships between t5 to t8 are as follows:

$$t6-t5=c+\text{offset2} \quad \text{Formula (6)}$$

$$t8-t7=d-\text{offset2} \quad \text{Formula (7)}$$

where offset2 represents an offset between time of the benchmark device and the time of the base station, namely, a difference between the time of the benchmark device and the time of the base station.

Therefore, it can be concluded that:

$$c+d=(t8-t7)+(t6-t5) \quad \text{Formula (8)}$$

where assuming that

$$D2=(t8-t7)+(t6-t5),\ c+d=D2 \quad \text{Formula (9)}$$

In a third part, an RTT operation between the benchmark device and the UE is as follows.

Moment t9: The benchmark device sends a packet 5 to the UE at the moment t9.

Moment t10: The UE receives the packet 5 at the moment t10.

Moment t11: The UE sends a packet 6 to the benchmark device at the moment t11, where a packet header of the packet 6 carries the time point t10 at which the packet 5 is received and the time point t11 at which the packet 6 is sent.

Moment t12: The benchmark device receives the packet 6 at the moment t12.

The benchmark device may obtain four time points, that is, t9 to t12, and then the benchmark device sends the four time points to the base station, where t9 to t12 are referred to as the third round-trip time information between the benchmark device and the UE.

Relationships between t9 to t12 are as follows:

$$t10-t9=e+\text{offset3} \quad \text{Formula (10)}$$

$$t12-t11=f-\text{offset3} \quad \text{Formula (11)}$$

where offset3 represents an offset between the time of the UE and the time of the benchmark device, namely, a difference between the time of the UE and the time of the benchmark device.

Therefore, it can be concluded that:

$$e+f=(t12-t11)+(t10-t9) \quad \text{Formula (12)}$$

where assuming that

$$D3=(t12-t11)+(t10-t9),\ e+f=D3 \quad \text{Formula (13)}$$

In addition, the following relationship exists:

$$offset1 + offset2 + offset3 = 0 \quad \text{Formula (14)}$$

Therefore, the following formula (15) is obtained according to the foregoing formulas (2), (6), (10), and (14):

$$b + c + e = D4 \quad \text{Formula (15)}$$

where

$$D4 = (t4 - t3) + (t6 - t5) + (t10 - t9).$$

Assuming that the target function is min(abs(a-b)+abs(d-c)+abs(f-e)) or min(min(abs(a-b)+abs(d-c)+abs(f-e))), the restrictive conditions are as follows (1) to (4):

$$(1) \ a + b = D1;$$

$$(2) \ c + d = D2;$$

$$(3) \ e + f = D3;$$

and

$$(4) \ b + c + e = D4,$$

where
min() represents a minimum value function, and abs() represents an absolute value function. The foregoing target function may be solved by using the foregoing four restrictive conditions, to obtain optimal solutions of a, b, c, d, e, and f.

In another implementation method, if the benchmark device is the another UE (namely, the benchmark UE), and the UE is connected to the benchmark device (namely, the benchmark UE) through the optical fiber, values of e and f may be obtained through measurement. Therefore, the values of e and f are determined, the foregoing target function may be modified to min(abs(a-b)+abs(d-c)), and the restrictive conditions include the following (1) to (3):

$$(1) \ a + b = D1;$$

$$(2) \ c + d = D2;$$

and

$$(3) \ b + c + e = D4.$$

In still another implementation method, if the benchmark device is the another base station (namely, the benchmark base station), and the base station is connected to the benchmark device (namely, the benchmark base station) through the optical fiber, values of c and d may be obtained through measurement. Therefore, the values of c and d are determined, the foregoing target function may be modified to min(abs(a-b)+abs(f-e)), and the restrictive conditions include the following (1) to (3):

$$(1) \ a + b = D1;$$

$$(2) \ e + f = D3;$$

and

$$(3)\ b+c+e=D4.$$

In yet another implementation method, the foregoing target function may be modified to: MSE(a-a'), MSE(b-b'), or MSE((a-a')+(b-b')), and the restrictive conditions include the following (1) to (4):

$$(1)\ a+b=D1;$$

$$(2)\ c+d=D2;$$

$$(3)\ e+f=D3;$$

and

$$(4)\ b+c+e=D4,$$

where

MSE() represents a minimum mean square error function, MSE(a-a')=min((a-a')^2), that is, a minimum value of a square of (a-a'), MSE(b-b')=min((b-b')^2), that is, a minimum value of a square of (b-b'), and MSE((a-a')+(b-b'))=min((a-a')^2)+(b-b')^2), that is, a minimum value of a sum of squares of (a-a') and (b-b'). a represents a measurement value of the delay from the base station to the UE, a' represents an actual value of the delay from the base station to the UE, b represents a measurement value of the delay from the UE to the base station, and b' represents an actual value of the delay from the UE to the base station. square() is a square value function.

After obtaining values of a and b through calculation, the base station may obtain an accurate value of offset1 based on the values of a and b and the foregoing formula (3). Then, the base station sends the value of offset1 to the UE. Assuming that the UE receives offset1 at a moment T1, the UE updates the time of the UE to T1+offset1, to implement accurate time synchronization between the UE and the base station.

Alternatively, the base station may send the time (represented by T2) of the base station and the value of a to the UE. After receiving T2 and the value of a, the UE updates the time of the UE to T2+a, to implement accurate time synchronization between the UE and the base station.

In a conventional technology, values of a and b are generally not calculated, and it is directly assumed that a=b, in other words, it is assumed that uplink and downlink paths between the base station and the UE are symmetric. Therefore, the foregoing formula (3) is simplified to offset1=[(t4-t3)-(t2-t1)]/2. As a result, offset1 obtained based on the method in the conventional technology is not accurate enough, and consequently, the UE cannot implement accurate time synchronization. However, in the method in this embodiment of this application, when the uplink and downlink paths between the base station and the UE are symmetric, the delay a from the base station to the UE is obtained through accurate calculation, the delay b from the UE to the base station is obtained through calculation, and then offset1 is obtained through accurate calculation, so that accurate time synchronization of the UE can be implemented.

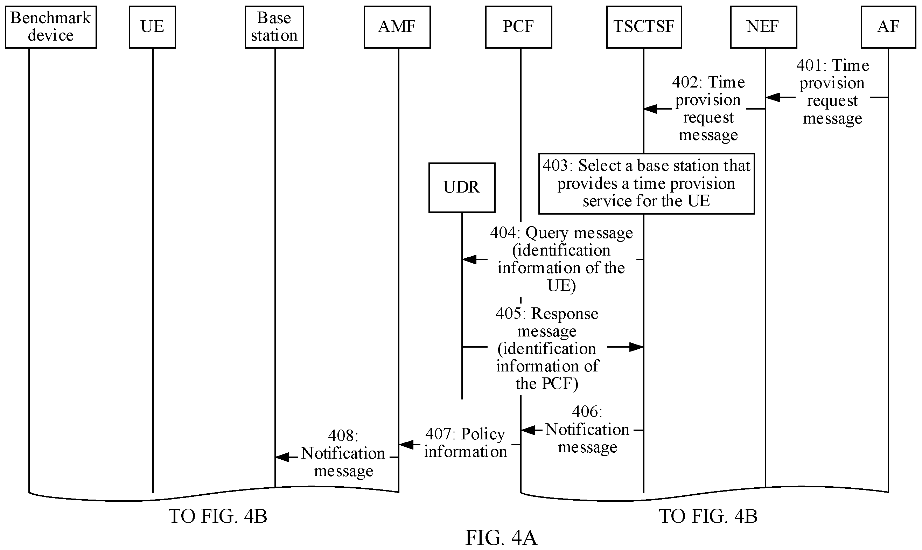

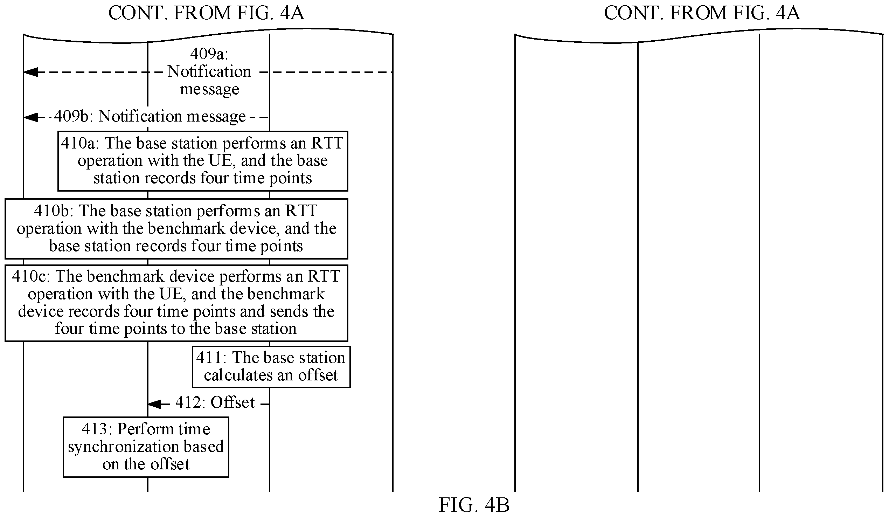

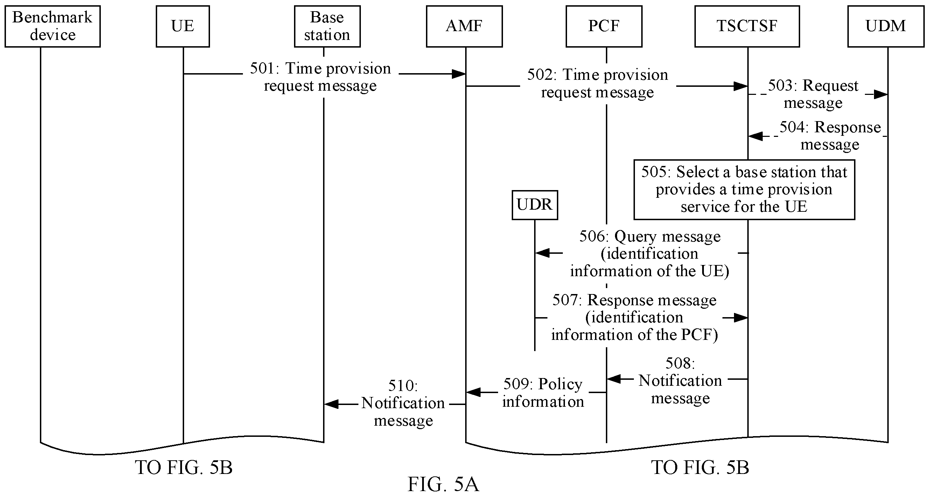

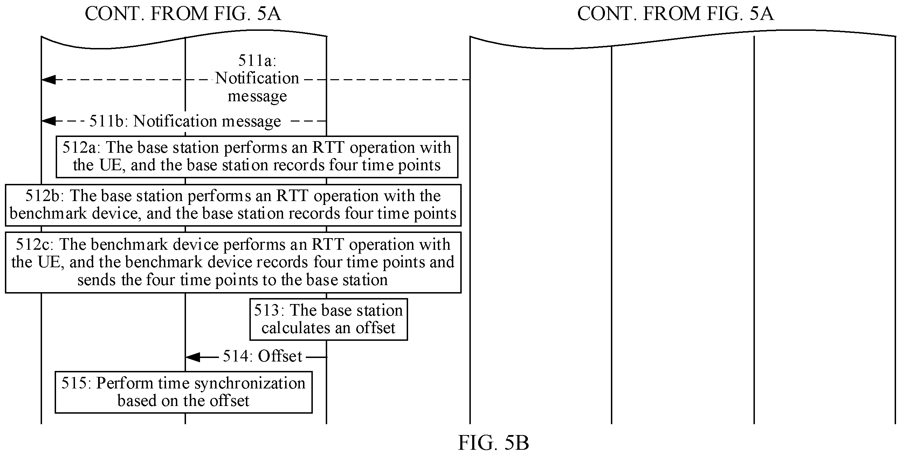

With reference to specific embodiments in FIG. 4A and FIG. 4B and FIG. 5A and FIG. 5B, the following describes the embodiment in FIG. 2 in detail.

FIG. 4A and FIG. 4B are a schematic flowchart of a time synchronization method according to an embodiment of this application. In the method, an AF requests to provide a time provision service for a UE.

The method includes the following steps.

Step 401: The AF sends a time provision request message to an NEF, where the time provision request message includes identification information of the UE, identification information of a benchmark device, and indication information.

The UE is a time provision object, to be specific, the time provision service is to be provided for the UE.

The benchmark device is a UE other than the time provision object; or the benchmark device is a base station but not a base station that provides the time provision service for the UE. The benchmark device provides an auxiliary function for accurate time provision of the UE.

The indication information indicates to perform a time provision error elimination operation.

Optionally, the time provision request message is an Nnef_TimeSynchronization_ASTICreate/Update/Delete message.

Step 402: The NEF sends the time provision request message to a TSCTSF, where the time provision request message includes the identification information of the UE, the identification information of the benchmark device, and the indication information.

After receiving the time provision request message from the AF, the NEF authenticates the AF. If the authentication succeeds, the NEF sends the time provision request message to the TSCTSF. The identification information of the UE, the identification information of the benchmark device, and the indication information in the time provision request message sent by the NEF are from the AF.

Optionally, the time provision request message is an Ntsetsf_TimeSynchronization_ASTICreate/Update/Delete message.

Step 403: The TSCTSF selects a base station that provides the time provision service for the UE.

For example, the TSCTSF selects, from a plurality of base stations based on distribution information of the base stations, the base station that provides the time provision service for the UE.

If the benchmark device is a base station, the benchmark device and the base station that provides the time provision service for the UE are different base stations.

Step 404: The TSCTSF sends a query message to a UDR, where the query message includes the identification information of the UE, and the query message is for requesting to obtain a PCF that provides a service for the UE.

In an implementation method, the query message is an Nudr_DM_Create/Update/Delete request message.

Step 405: The UDR sends a response message to the TSCTSF, where the response message includes identification information of the PCF.

In an implementation method, the response message is an Nudr_DM_Create/Update/Delete response message.

Step 406: The TSCTSF sends a notification message to the PCF, where the notification message includes the identification information of the UE, identification information of the base station, the identification information of the benchmark device, and the indication information.

The base station is the base station that is selected by the TSCTSF to provide the time provision service for the UE, and the identification information of the UE, the identification information of the benchmark device, and the indication information are received by the TSCTSF in the foregoing step 402.

Step 407: The PCF sends policy information to an AMF, where the policy information includes the identification information of the UE, the identification information of the base station, the identification information of the benchmark device, and the indication information.

The identification information of the UE, the identification information of the base station, the identification information of the benchmark device, and the indication information in the policy information are received by the PCF from the TSCTSF.

In another implementation method, if the query message in the step 404 is for requesting to obtain an AMF that provides a service for the UE, the response message in step 405 carries identification information of the AMF. Step 406 and step 407 do not need to be performed, but the TSCTSF sends the identification information of the UE, identification information of the base station, the identification information of the benchmark device, and the indication information to the AMF.

Step 408: The AMF sends the notification message to the base station, where the notification message includes the identification information of the UE, the identification information of the benchmark device, and the indication information.

The identification information of the UE, the identification information of the benchmark device, and the indication information in the notification message are received by the AMF from the PCF or the TSCTSF.

Step 409a: The AMF sends the notification message to the benchmark device, where the notification message includes the identification information of the UE, the identification information of the base station, and the indication information.

The identification information of the UE, the identification information of the base station, and the indication information in the notification message are received by the AMF from the PCF or the TSCTSF.

Step 409b: The base station sends the notification message to the benchmark device, where the notification message includes the identification information of the UE, the identification information of the base station, and the indication information.

The identification information of the UE, the identification information of the base station, and the indication information in the notification message are received by the base station from the AMF.

Either step 409a or step 409b is performed, in other words, step 409a or step 409b is performed.

Step 410a: The base station performs an RTT operation with the UE, and the base station records four time points.

For example, the four time points recorded by the base station are t1, t2, t3, and t4.

Step 410b: The base station performs an RTT operation with the benchmark device, and the base station records four time points.

For example, the four time points recorded by the base station are t5, t6, t7, and t8.

Step 410c: The benchmark device performs an RTT operation with the UE, and the benchmark device records four time points and sends the four time points to the base station.

For example, the four time points recorded by the benchmark device and sent to the base station are t9, t10, t11, and t12.

A sequence of step 410a, step 410b, and step 410c is not limited.

Step 411: The base station calculates an offset (offset).

The base station calculates the offset based on t1, t2, t3, t4, t5, t6, t7, t8, t9, t10, t11, and t12. For a specific calculation method, refer to the descriptions of the embodiment in FIG. 2.

It should be noted that a target function used by the base station to calculate the offset may be preconfigured in the base station, or may be from the AF. In other words, the target function or information indicating the target function is carried in step 401 and step 402 and step 406 to step 408.

Step 412: The base station sends the offset to the UE.

Step 413: The UE performs time synchronization based on the offset.

Specifically, the UE may update time of the UE to a sum of a time point at which the offset is received and the offset. For example, if the UE receives the offset at a moment T, and a value of the offset is represented by K, the UE updates the time of the UE to T+K.

In another implementation method, step 411 to step 413 are not performed, but the following is performed: The base station calculates a delay (delay) from the base station to the UE, and then the base station sends T1 and the delay to the UE, where T1 is time that is based on a clock on the base station and at which the base station sends the delay. Then, the UE updates time of the UE to a sum of T1 and the delay.

Optionally, after the foregoing step 406, the TSCTSF may send, to the NEF, a time provision response message for notifying successful time provision, and then the NEF sends, to the AF, the time provision response message for notifying successful time provision.

In the foregoing solutions, the AF requests the time provision service for the UE. The TSCTSF selects the base station that provides the time provision service for the UE. The base station performs the time provision error elimination operation, determines an accurate offset, and sends the offset to the UE. The UE performs time synchronization based on the offset. The method can reduce impact of path asymmetry on time provision of the base station, implement accurate time synchronization between the UE and the base station, and help improve a communication capability of the UE.

FIG. 5A and FIG. 5B are a schematic flowchart of a time synchronization method according to an embodiment of this application. In the method, a UE actively requests to provide a time provision service for the UE.

The method includes the following steps.

Step 501: The UE sends a time provision request message to an AMF, where the time provision request message includes identification information of the UE, identification information of a benchmark device, and indication information.

The UE is a time provision object, to be specific, the time provision service is to be provided for the UE.

The benchmark device is a UE other than the time provision object; or the benchmark device is a base station but not a base station that provides the time provision service for the UE. The benchmark device provides an auxiliary function for accurate time provision of the UE.

The indication information indicates to perform a time provision error elimination operation.

Optionally, the time provision request message is an NAS_TimeSynchronization_ASTICreate/Update/Delete message.

Step 502: The AMF sends the time provision request message to a TSCTSF, where the time provision request message includes the identification information of the UE, the identification information of the benchmark device, and the indication information.

The identification information of the UE, the identification information of the benchmark device, and the indication information in the time provision request message sent by the AMF are from the UE.

Optionally, the time provision request message is an Ntsetsf_TimeSynchronization_ASTICreate/Update/Delete message.

Step 503: The TSCTSF sends a request message to a UDM, where the request message includes the identification information of the UE.

The request message is used to query whether the UE is authorized to be provided with the time provision service.

Step 504: The UDM sends a response message to the TSCTSF.

The response message indicates that the UE is authorized to be provided with the time provision service.

Step 503 and step 504 are optional steps.

For step 505 to step 515, refer to step 403 to step 413.

In another implementation method, instead of step 513 to step 515, the following operation is performed: The base station calculates a delay (delay) from the base station to the UE, and then the base station sends T1 and the delay to the UE, where T1 is time that is based on a clock on the base station and at which the base station sends the delay. Then, the UE updates time of the UE to a sum of T1 and the delay.

Optionally, the TSCTSF may send, to the AMF, a time provision response message for notifying successful time provision, and then the AMF sends, to the UE, the time provision response message for notifying successful time provision.

In the foregoing solutions, the UE actively requests the time provision service. The TSCTSF selects the base station that provides the time provision service for the UE. The base station performs the time provision error elimination operation, determines an accurate offset, and sends the offset to the UE. The UE performs time synchronization based on the offset. The method can reduce impact of path asymmetry on time provision of the base station, implement accurate time synchronization between the UE and the base station, and help improve a communication capability of the UE.

It should be noted that, in the embodiments of FIG. 4A and FIG. 4B and FIG. 5A and FIG. 5B, the TSCTSF selects the base station that provides the time provision service for the UE. In another implementation method, the TSCTSF may not select the base station that provides the time provision service for the UE, but sends a first notification message to an AMF/PCF, where the first notification message includes identification information of UE, identification information of a benchmark device, indication information, identification information of a plurality of base stations, and capability information of the plurality of base stations. The capability information indicates whether the base station can provide time, and the indication information indicates to perform a time provision error elimination operation. Then, the AMF/PCF selects, based on location information of the plurality of base stations and the capability information of the plurality of base stations, a base station that provides a time provision service for the UE. Then, the AMF/PCF sends a second notification message to the selected base station, where the second notification message includes the identification information of the UE, the identification information of the benchmark device, and the indication information. That the AMF/PCF selects, based on location information of the plurality of base stations and the capability information of the plurality of base stations, a base station that provides a time provision service for the UE may be that, for example, the AMF/PCF selects, from the plurality of base stations based on the capability information of the plurality of base stations, at least one base station that can provide time, and then selects, from the at least one base station based on location information of the at least one base station, a base station that provides a time provision service for the UE.

It may be understood that, to implement functions in the foregoing embodiments, an access network device, a clock management network element, a mobility management network element, or a policy control network element includes a corresponding hardware structure and/or software module for performing each function. A person skilled in the art should be easily aware that, in this application, the units and method steps in the examples described with reference to embodiments disclosed in this application may be implemented by hardware or a combination of hardware and computer software. Whether a function is performed by hardware or hardware driven by computer software depends on particular application scenarios and design constraint conditions of the technical solutions.

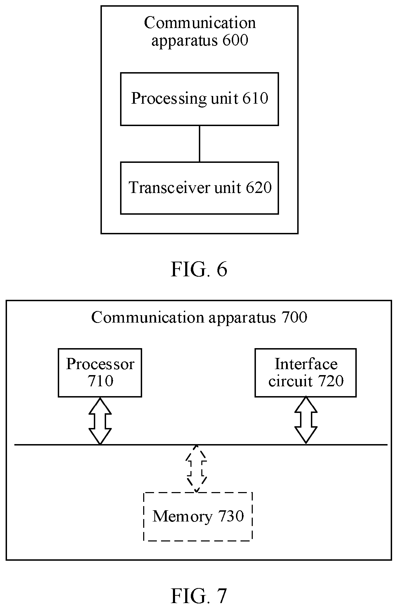

FIG. 6 and FIG. 7 each are a diagram of a structure of a possible communication apparatus according to an embodiment of this application. These communication apparatuses may be configured to implement functions of the access network device, the clock management network element, the mobility management network element, or the policy control network element in the foregoing method embodiments. Therefore, beneficial effects of the foregoing method embodiments can also be implemented. In embodiments of this application, the communication apparatus may be an access network device, a clock management network element, a mobility management network element, or a policy control network element, or may be a module in an access network device, a module in a clock management network element, a module in a mobility management network element, or a module in a policy control network element.

As shown in FIG. 6, the communication apparatus 600 includes a processing unit 610 and a transceiver unit 620. The communication apparatus 600 is configured to implement functions of the access network device or the terminal device in the foregoing method embodiments. The transceiver unit 620 may be configured to implement a corresponding communication function. The transceiver unit 620 may also be referred to as a communication interface or a communication unit. The processing unit 610 may be configured to implement a corresponding processing function. Optionally, the communication apparatus 600 further includes a storage unit. The storage unit may be configured to store instructions and/or data. The processing unit 610 may read the instructions and/or the data in the storage unit, so that the communication apparatus 600 implements actions of the access network device (such as the base station), the clock management network element (such as the TSCTSF), the mobility management network element (such as the AMF), or the policy control network element (such as the PCF) in the foregoing method embodiments.

When the communication apparatus 600 is configured to implement the function of the access network device in the foregoing method embodiments, the processing unit 610 is configured to: obtain first round-trip time information between the access network device and the terminal device, second round-trip time information between the access network device and a benchmark device, and third round-trip time information between the benchmark device and the terminal device; and determine a delay from the access network device to the terminal device based on the first round-trip time information, the second round-trip time information, and the third round-trip time information. The transceiver unit 620 is configured to send the delay or an offset between the access network device and the terminal device to the terminal device, where the delay or the offset is used for time synchronization of the terminal device, and the offset is determined based on the first round-trip time information and the delay.

In a possible implementation method, the transceiver unit 620 is further configured to receive a notification message, where the notification message includes identification information of the benchmark device, identification information of the terminal device, and indication information, and the indication information indicates to perform a time provision error elimination operation.

In a possible implementation method, the transceiver unit 620 is further configured to send the identification information of the terminal device and the indication information to the benchmark device.

In a possible implementation method, the processing unit 610 is specifically configured to determine the delay from the access network device to the terminal device based on a target function, the first round-trip time information, the second round-trip time information, and the third round-trip time information.

In a possible implementation method, the target function is preconfigured in the access network device, or is from an application function network element or a clock management network element.

In a possible implementation method, the processing unit 610 is specifically configured to: determine restrictive conditions of the target function based on the first round-trip time information, the second round-trip time information, and the third round-trip time information; and determine the delay from the access network device to the terminal device based on the restrictive conditions of the target function and the target function.

In a possible implementation method, the target function is a minimum value function or a minimum mean square error function that uses the restrictive conditions as solution space preferences.

In a possible implementation method, the restrictive conditions of the target function include:

$$(1)\ a+b=D1;$$

$$(2)\ c+d=D2;$$

$$(3)\ e+f=D3;$$

and

$$(4)\ b+c+e=D4,$$

where a is the delay from the access network device to the terminal device, b is a delay from the terminal device to the access network device, c is a delay from the access network device to the benchmark device, d is a delay from the benchmark device to the access network device, e is a delay from the benchmark device to the terminal device, f is a delay from the terminal device to the benchmark device, D1 is determined based on the first round-trip time information, D2 is determined based on the second round-trip time information, D3 is determined based on the third round-trip time information, and D4 is determined based on the first round-trip time information, the second round-trip time information, and the third round-trip time information.

In a possible implementation method, the target function is min(abs(a-b)+abs(d-c)+abs(f-e)) or min(min(abs(a-b)+abs(d-c)+abs(f-e))), where min() represents a minimum value function, and abs() represents an absolute value function.

In a possible implementation method, the target function is MSE(a-a'), MSE(b-b'), or MSE((a-a')+(b-b')), where MSE() represents a minimum mean square error function.

In a possible implementation method, the benchmark device is a benchmark terminal device, and the terminal device is connected to the benchmark terminal device through an optical fiber; and the restrictive conditions of the target function include:

$$(1)\ a+b=D1;$$

$$(2)\ c+d=D2;$$

and

$$(3)\ b+c+e=D4,$$

where

a is the delay from the access network device to the terminal device, b is a delay from the terminal device to the access network device, c is a delay from the access network device to the benchmark terminal device, d is a delay from the benchmark terminal device to the access network device, e is a delay from the benchmark terminal device to the terminal device, D1 is determined based on the first round-trip time information, D2 is determined based on the second round-trip time information, and D4 is determined based on the first round-trip time information, the second round-trip time information, and the third round-trip time information.

In a possible implementation method, the target function is min(abs(a-b)+abs(d-c)), where min() represents a minimum value function, and abs() represents an absolute value function.

In a possible implementation method, the benchmark device is a benchmark access network device, and the access network device is connected to the benchmark access network device through an optical fiber; and the restrictive conditions of the target function include:

$$(1)\ a+b=D1;$$

$$(2)\ e+f=D3;$$

and

$$(3)\ b+c+e=D4,$$

where

a is the delay from the access network device to the terminal device, b is a delay from the terminal device to the access network device, c is a delay from the access network device to the benchmark access network device, e is a delay from the benchmark access network device to the terminal device, f is a delay from the terminal device to the benchmark access network device, D1 is determined based on the first round-trip time information, D3 is determined based on the third round-trip time information, and D4 is determined based on the first round-trip time information, the second round-trip time information, and the third round-trip time information.

In a possible implementation method, the target function is min(abs(a-b)+abs(f-e)), where min() represents a minimum value function, and abs() represents an absolute value function.

When the communication apparatus 600 is configured to implement a function of the clock management network element in the foregoing method embodiments, the transceiver unit 620 is configured to receive a time provision request message, where the time provision request message includes identification information of a terminal device, identification information of a benchmark device, and indication information, and the indication information indicates to perform a time provision error elimination operation. The processing unit 610 is configured to select an access network device that provides a time provision service for the terminal device. The transceiver unit 620 is further configured to send a notification message to the policy control network element or the mobility management network element, where the notification message includes the identification information of the terminal device, the identification information of the benchmark device, identification information of the access network device, and the indication information.

In a possible implementation method, the transceiver unit 620 is further configured to: send a query message to a unified data repository network element, where the query message includes the identification information of the terminal device, and the query message is for requesting to obtain the policy control network element or the mobility management network element that provides a service for the terminal device; and receive identification information of the policy control network element or identification information of the mobility management network element from the unified data repository network element.

In a possible implementation method, the transceiver unit 620 is further configured to: send a request message to a unified data management network element, where the request message includes the identification information of the terminal device, and the request message is used to query whether the terminal device is authorized to be provided with a time provision service; and receive a response message from the unified data management network element, where the response message indicates that the terminal device is authorized to be provided with the time provision service.

In a possible implementation method, the transceiver unit 620 is specifically configured to receive the time provision request message from the terminal device or an application function network element.

When the communication apparatus 600 is configured to implement a function of the mobility management network element or the policy control network element in the foregoing method embodiments, the transceiver unit 620 is configured to receive a first notification message, where the first notification message includes identification information of a terminal device, identification information of a benchmark device, indication information, identification information of a plurality of access network devices, and capability information of the plurality of access network devices, the capability information indicates whether the access network device can provide time, and the indication information indicates to perform a time provision error elimination operation. The processing unit 610 is configured to select, based on location information of the plurality of access network devices and the capability information of the plurality of access network devices, an access network device that provides a time provision service for the terminal device. The transceiver unit 620 is further configured to send a second notification message to the selected access network device, where the second notification message includes the identification information of the terminal device, the identification information of the benchmark device, and the indication information.

In a possible implementation method, the processing unit 610 is specifically configured to: select, from the plurality of access network devices based on the capability information of the plurality of access network devices, at least one access network device that can provide time; and select, based on location information of the at least one access network device, an access network device that provides a time provision service for the terminal device.

For more detailed descriptions of the processing unit 610 and the transceiver unit 620, directly refer to related descriptions in the foregoing method embodiments. Details are not described herein again.

The communication apparatus 700 shown in FIG. 7 includes a processor 710 and an interface circuit 720. The processor 710 and the interface circuit 720 are coupled to each other. It may be understood that the interface circuit 720 may be a transceiver or an input/output interface. Optionally, the communication apparatus 700 may further include a memory 730, configured to store instructions executed by the processor 710, or store input data required by the processor 710 to run instructions, or store data generated after the processor 710 runs instructions.

When the communication apparatus 700 is configured to implement the foregoing method embodiments, the processor 710 is configured to implement a function of the processing unit 610, and the interface circuit 720 is configured to implement a function of the transceiver unit 620.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor or the like.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write the information into the storage medium. Certainly, the storage medium may be a component of the processor. The processor and the storage medium may be disposed in the ASIC. Certainly, the processor and the storage medium may exist in a base station or terminal as discrete components.

All or some of the foregoing embodiments may be implemented by using software, hardware, firmware, or any combination thereof. When the software is used to implement the embodiments, all or some of the embodiments may be implemented in a form of a computer program product. The computer program product includes one or more computer programs or instructions. When the computer programs or instructions are loaded and executed on a computer, the procedures or functions in embodiments of this application are all or partially performed. The computer may be a general-purpose computer, a dedicated computer, a computer network, a base station, a UE, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. "And/or" describes an association relationship between associated objects, and indicates that three relationships may exist. For example, A and/or B may indicate the following three cases: Only A exists, both A and B exist, and only B exists, where A and B may be singular or plural. In the text descriptions of this application, the character "/" indicates an "or" relationship between the associated objects. In the formula in this application, the character "/" indicates a "division" relationship between the associated objects.

It may be understood that various numbers in embodiments of this application are merely used for differentiation for ease of description, and are not used to limit the scope of embodiments of this application. Sequence numbers of the foregoing processes do not mean execution sequences, and the execution sequences of the processes should be determined based on functions and internal logic of the processes.

**Claims**

1. A time synchronization method, comprising:

   obtaining, by an access network device, first round-trip time information between the access network device and a terminal device, second round-trip time information between the access network device and a benchmark device, and third round-trip time information between the benchmark device and the terminal device;

   determining, by the access network device, a delay from the access network device to the terminal device based on the first round-trip time information, the second round-trip time information, and the third round-trip time information; and

   sending, by the access network device, the delay or an offset between the access network device and the terminal device to the terminal device, wherein the delay or the offset is used for time synchronization of the terminal device, and the offset is determined based on the first round-trip time information and the delay.

2. The method according to claim 1, further comprising:
   receiving, by the access network device, a notification message, wherein the notification message comprises identification information of the benchmark device, identification information of the terminal device, and indication information, and the indication information indicates to perform a time provision error elimination operation.

3. The method according to claim 2, further comprising:
   sending, by the access network device, the identification information of the terminal device and the indication information to the benchmark device.

4. The method according to any one of claims 1 to 3, wherein the determining, by the access network device, a delay from the access network device to the terminal device based on the first round-trip time information, the second round-trip time information, and the third round-trip time information comprises:
   determining, by the access network device, the delay from the access network device to the terminal device based on a target function, the first round-trip time information, the second round-trip time information, and the third round-trip time information.

5. The method according to claim 4, wherein the target function is preconfigured in the access network device, or is from an application function network element or a clock management network element.

6. The method according to claim 4 or 5, wherein the determining, by the access network device, the delay from the access network device to the terminal device based on a target function, the first round-trip time information, the second round-trip time information, and the third round-trip time information comprises:

   determining, by the access network device, restrictive conditions of the target function based on the first round-trip time information, the second round-trip time information, and the third round-trip time information; and
   determining, by the access network device, the delay from the access network device to the terminal device based on the restrictive conditions of the target function and the target function.

7. The method according to claim 6, wherein the target function is a minimum value function or a minimum mean square error function that uses the restrictive conditions as solution space preferences.

8. The method according to claim 6 or 7, wherein

   the restrictive conditions of the target function comprise:

$$(1)\ a+b=D1;$$

$$(2)\ c+d=D2;$$

$$(3)\ e+f=D3;$$

and

$$(4)\ b+c+e=D4,$$

wherein

a is the delay from the access network device to the terminal device, b is a delay from the terminal device to the access network device, c is a delay from the access network device to the benchmark device, d is a delay from the benchmark device to the access network device, e is a delay from the benchmark device to the terminal device, f is a delay from the terminal device to the benchmark device, D1 is determined based on the first round-trip time information, D2 is determined based on the second round-trip time information, D3 is determined based on the third round-trip time information, and D4 is determined based on the first round-trip time information, the second round-trip time information, and the third round-trip time information.

9. The method according to claim 8, wherein

the target function is min(abs(a-b)+abs(d-c)+abs(f-e)) or min(min(abs(a-b)+abs(d-c)+abs(f-e))), wherein min() represents a minimum value function, and abs() represents an absolute value function.

10. The method according to claim 8, wherein

the target function is MSE(a-a'), MSE(b-b'), or MSE((a-a')+(b-b')), wherein MSE() represents a minimum mean square error function.

11. The method according to claim 6 or 7, wherein the benchmark device is a benchmark terminal device, and the terminal device is connected to the benchmark terminal device through an optical fiber; and

the restrictive conditions of the target function comprise:

$$(1)\ a+b=D1;$$

$$(2)\ c+d=D2;$$

and

$$(3)\ b+c+e=D4,$$

wherein

a is the delay from the access network device to the terminal device, b is a delay from the terminal device to the access network device, c is a delay from the access network device to the benchmark terminal device, d is a delay from the benchmark terminal device to the access network device, e is a delay from the benchmark terminal device to the terminal device, D1 is determined based on the first round-trip time information, D2 is determined based on the second round-trip time information, and D4 is determined based on the first round-trip time information, the second round-trip time information, and the third round-trip time information.

12. The method according to claim 11, wherein the target function is min(abs(a-b)+abs(d-c)), wherein min() represents a minimum value function, and abs() represents an absolute value function.

13. The method according to claim 6 or 7, wherein the benchmark device is a benchmark access network device, and the access network device is connected to the benchmark access network device through an optical fiber; and

the restrictive conditions of the target function comprise:

$$(1)\ a+b=D1;$$

$$(2)\ e+f=D3;$$

and

$$(3)\ b+c+e=D4,$$

wherein

a is the delay from the access network device to the terminal device, b is a delay from the terminal device to the access network device, c is a delay from the access network device to the benchmark access network device, e is a delay from the benchmark access network device to the terminal device, f is a delay from the terminal device to the benchmark access network device, D1 is determined based on the first round-trip time information, D3 is determined based on the third round-trip time information, and D4 is determined based on the first round-trip time information, the second round-trip time information, and the third round-trip time information.

14. The method according to claim 13, wherein

the target function is min(abs(a-b)+abs(f-e)), wherein
min() represents a minimum value function, and abs() represents an absolute value function.

15. A communication apparatus, comprising:

a processing unit, configured to: obtain first round-trip time information between an access network device and a terminal device, second round-trip time information between the access network device and a benchmark device, and third round-trip time information between the benchmark device and the terminal device; and determine a delay from the access network device to the terminal device based on the first round-trip time information, the second round-trip time information, and the third round-trip time information; and
a transceiver unit, configured to send the delay or an offset between the access network device and the terminal device to the terminal device, wherein the delay or the offset is used for time synchronization of the terminal device, and the offset is determined based on the first round-trip time information and the delay.

16. The apparatus according to claim 15, wherein the transceiver unit is further configured to receive a notification message, wherein the notification message comprises identification information of the benchmark device, identification information of the terminal device, and indication information, and the indication information indicates to perform a time provision error elimination operation.

17. The apparatus according to claim 16, wherein the transceiver unit is further configured to send the identification information of the terminal device and the indication information to the benchmark device.

18. The apparatus according to any one of claims 15 to 17, wherein the processing unit is specifically configured to determine the delay from the access network device to the terminal device based on a target function, the first round-trip time information, the second round-trip time information, and the third round-trip time information.

19. The apparatus according to claim 18, wherein the target function is preconfigured in the access network device, or is from an application function network element or a clock management network element.

20. The apparatus according to claim 18 or 19, wherein the processing unit is specifically configured to: determine restrictive conditions of the target function based on the first round-trip time information, the second round-trip time information, and the third round-trip time information; and determine the delay from the access network device to the terminal device based on the restrictive conditions of the target function and the target function.

21. The apparatus according to claim 20, wherein the target function is a minimum value function or a minimum mean square error function that uses the restrictive conditions as solution space preferences.

22. The apparatus according to claim 20 or 21, wherein

the restrictive conditions of the target function comprise:

$$(1)\ a+b=D1;$$

$$(2)\ c+d=D2;$$

$$(3)\ e+f=D3;$$

and

$$(4)\ b+c+e=D4,$$

wherein
a is the delay from the access network device to the terminal device, b is a delay from the terminal device to the access network device, c is a delay from the access network device to the benchmark device, d is a delay from the benchmark device to the access network device, e is a delay from the benchmark device to the terminal device, f is a delay from the terminal device to the benchmark device, D1 is determined based on the first round-trip time information, D2 is determined based on the second round-trip time information, D3 is determined based on the third round-trip time information, and D4 is determined based on the first round-trip time information, the second round-trip time information, and the third round-trip time information.

23. The apparatus according to claim 22, wherein

the target function is min(abs(a-b)+abs(d-c)+abs(f-e)) or min(min(abs(a-b)+abs(d-c)+abs(f-e))), wherein min() represents a minimum value function, and abs() represents an absolute value function.

24. The apparatus according to claim 22, wherein

the target function is MSE(a-a'), MSE(b-b'), or MSE((a-a')+(b-b')), wherein MSE() represents a minimum mean square error function.

25. The apparatus according to claim 20 or 21, wherein the benchmark device is a benchmark terminal device, and the terminal device is connected to the benchmark terminal device through an optical fiber; and

the restrictive conditions of the target function comprise:

$$(1)\ a+b=D1;$$

$$(2)\ c+d=D2;$$

and

$$(3)\ b+c+e=D4,$$

wherein
a is the delay from the access network device to the terminal device, b is a delay from the terminal device to the access network device, c is a delay from the access network device to the benchmark terminal device, d is a delay from the benchmark terminal device to the access network device, e is a delay from the benchmark terminal device to the terminal device, D1 is determined based on the first round-trip time information, D2 is determined based on the second round-trip time information, and D4 is determined based on the first round-trip time information, the second round-trip time information, and the third round-trip time information.

26. The apparatus according to claim 25, wherein

the target function is min(abs(a-b)+abs(d-c)), wherein
min() represents a minimum value function, and abs() represents an absolute value function.

27. The apparatus according to claim 20 or 21, wherein the benchmark device is a benchmark access network device, and the access network device is connected to the benchmark access network device through an optical fiber; and

the restrictive conditions of the target function comprise:

$$(1)\ a+b=D1;$$

$$(2)\ e+f=D3;$$

and

$$(3)\ b+c+e=D4,$$

wherein
a is the delay from the access network device to the terminal device, b is a delay from the terminal device to the access network device, c is a delay from the access network device to the benchmark access network device, e is a delay from the benchmark access network device to the terminal device, f is a delay from the terminal device to the benchmark access network device, D1 is determined based on the first round-trip time information, D3 is determined based on the third round-trip time information, and D4 is determined based on the first round-trip time information, the second round-trip time information, and the third round-trip time information.

28. The apparatus according to claim 27, wherein

the target function is min(abs(a-b)+abs(f-e)), wherein
min() represents a minimum value function, and abs() represents an absolute value function.

29. A computer program product, comprising a computer program, wherein when the computer program is executed by a communication apparatus, the method according to any one of claims 1 to 14 is implemented.

30. A computer-readable storage medium, wherein the storage medium stores a computer program or instructions; and when the computer program or the instructions are executed by a communication apparatus, the method according to any one of claims 1 to 14 is implemented.

PCF

UDM

AF

TSCTSF

Npcf

Nudm

Naf

Ntsctsf

Nudr

Namf

Nsmf

UDR

AMF

SMF

N1

N2

N4

UE

RAN

N3

UPF

N6

DN

FIG. 1(a)

TNF

UDM

N35

UDR

N8

N10

N36

AMF

N11

SMF

N7

PCF

N5

AF

N15

N1

N2

N4

UE

RAN

N3

UPF

N6

DN

N9

FIG. 1(b)

UE

Base station

201: Obtain first round-trip time information between the base station and the UE, second round-trip time information between the base station and a benchmark device, and third round-trip time information between the benchmark device and the UE

202: Determine a delay from the base station to the UE based on the first round-trip time information, the second round-trip time information, and the third round-trip time information

203: Delay or offset between the base station and the UE

204: Perform time synchronization based on the delay or the offset between the base station and the UE

FIG. 2

Base
station

a

b

c

d

UE

e

f

Benchmark
device

FIG. 3(a)

FIG. 3(b)

EP 4 529 301 A1

Benchmark device | UE | Base station | AMF | PCF | TSCTSF | NEF | AF

401: Time provision request message

402: Time provision request message

403: Select a base station that provides a time provision service for the UE

UDR

404: Query message (identification information of the UE)

405: Response message (identification information of the PCF)

406: Notification message

407: Policy information

408: Notification message

TO FIG. 4B

TO FIG. 4B

FIG. 4A

409a: Notification message

409b: Notification message

410a: The base station performs an RTT operation with the UE, and the base station records four time points

410b: The base station performs an RTT operation with the benchmark device, and the base station records four time points

410c: The benchmark device performs an RTT operation with the UE, and the benchmark device records four time points and sends the four time points to the base station

411: The base station calculates an offset

412: Offset

413: Perform time synchronization based on the offset

FIG. 4B

EP 4 529 301 A1

EP 4 529 301 A1

| Benchmark device | UE | Base station | AMF | PCF | TSCTSF | UDM |
|---|---|---|---|---|---|---|

501: Time provision request message

502: Time provision request message

503: Request message

504: Response message

505: Select a base station that provides a time provision service for the UE

UDR

506: Query message (identification information of the UE)

507: Response message (identification information of the PCF)

508: Notification message

509: Policy information

510: Notification message

TO FIG. 5B

TO FIG. 5B

FIG. 5A

511a: Notification message

511b: Notification message

512a: The base station performs an RTT operation with the UE, and the base station records four time points

512b: The base station performs an RTT operation with the benchmark device, and the base station records four time points

512c: The benchmark device performs an RTT operation with the UE, and the benchmark device records four time points and sends the four time points to the base station

513: The base station calculates an offset

514: Offset

515: Perform time synchronization based on the offset

FIG. 5B

Communication
apparatus 600

Processing unit 610

Transceiver unit 620

FIG. 6

Communication apparatus 700

Processor
710

Interface
circuit 720

Memory 730

FIG. 7

# INTERNATIONAL SEARCH REPORT

| | International application No. |
|---|---|
| | **PCT/CN2023/075611** |

### A. CLASSIFICATION OF SUBJECT MATTER

H04W 56/00(2009.01)i

According to International Patent Classification (IPC) or to both national classification and IPC

### B. FIELDS SEARCHED

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

3GPP, CNTXT, ENTXT: 基站 基准 接入网 精度 时钟 手机 终端 授时 同步 往返 延迟 延时 时间 时延 UE RTT BS BTS access network terminal clock delay latency tim+ Synchroniz+ round trip

### C. DOCUMENTS CONSIDERED TO BE RELEVANT

| Category* | Citation of document, with indication, where appropriate, of the relevant passages | Relevant to claim No. |
|---|---|---|
| A | CN 108964819 A (HUAWEI TECHNOLOGIES CO., LTD.) 07 December 2018 (2018-12-07) description, paragraphs [0143]-[0290] | 1-30 |
| A | WO 2015180188 A1 (HUAWEI TECHNOLOGIES CO., LTD.) 03 December 2015 (2015-12-03) entire document | 1-30 |
| A | CN 112636858 A (BEIJING UNIVERSITY OF POSTS AND TELECOMMUNICATIONS) 09 April 2021 (2021-04-09) entire document | 1-30 |
| A | ERICSSON. "Enhanced RTT Based Propagation Delay Determination" *3GPP TSG-RAN WG1#103e Tdoc R1-2007711*, 13 November 2020 (2020-11-13), entire document | 1-30 |
| A | OPPO. "Enhancement for support of time synchronization" *3GPP TSG RAN WG1 #104bis-e R1-2102396*, 20 April 2021 (2021-04-20), entire document | 1-30 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **17 April 2023** | **23 April 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

<div align="center">

**INTERNATIONAL SEARCH REPORT**
**Information on patent family members**

</div>

International application No.

**PCT/CN2023/075611**

| Patent document cited in search report | | | Publication date (day/month/year) | Patent family member(s) | | | Publication date (day/month/year) |
|---|---|---|---|---|---|---|---|
| CN | 108964819 | A | 07 December 2018 | WO | 2018210281 | A1 | 22 November 2018 |
| WO | 2015180188 | A1 | 03 December 2015 | JP | 2017521975 | A | 03 August 2017 |
| | | | | KR | 20170009993 | A | 25 January 2017 |
| | | | | US | 2017078990 | A1 | 16 March 2017 |
| | | | | EP | 3142430 | A1 | 15 March 2017 |
| | | | | CN | 105325037 | A | 10 February 2016 |
| | | | | IN | 201627041310 | A | 06 January 2017 |
| CN | 112636858 | A | 09 April 2021 | None | | | |

Form PCT/ISA/210 (patent family annex) (July 2022)

**REFERENCES CITED IN THE DESCRIPTION**

**Patent documents cited in the description**

- CN 202210594963